# FASCICULE DE BREVET EUROPEEN

(11) **EP 0 611 693 B1**
(45) Date de publication et mention de la délivrance du brevet: **14.08.1996**
(21) Numéro de dépôt: 94400297.1
(22) Date de dépôt: 11.02.1994
(51) Int. Cl.: B64F 1/12, F16B 21/16

(54) **Tête de harpon et harpons dotés de ces têtes pour l'arrimage d'hélicoptères sur des plates formes**
Harpunekopf und damit ausgerüstete Harpunen zur Verankerung von Hubschraubern auf Plattformen
Harpoon head and harpoons equipped with such a head for mooring helicopters on platforms

(30) Priorité: 19.02.1993 FR 9301899
(43) Date de publication de la demande: 24.08.1994
(73) Titulaire: ETAT FRANCAIS représenté par le Délégué Général pour l'Armement, F-00460 Armées (FR)
(72) Inventeur: Amiand, Vincent, 16000 Angoulème (FR); Leblanc, Francis, 16600 Ruelle (FR); Borghetti, Paul, 16600 Ruelle (FR)

(56) Documents cités:
- WO-A-90/13480
- DE-U- 9 204 570
- GB-A- 1 159 323
- US-A- 1 926 798

## Description

La présente invention concerne un système d'ancrage mettant en oeuvre un harpon et une grille, système qu'il est connu d'utiliser pour l'arrimage sur une plate-forme d'un aéronef à décollage et atterrissage verticaux. Elle concerne plus précisément la tête du harpon dans un tel système, ainsi que des harpons dotés de cette tête.

Les systèmes d'arrimage à harpon et grille sont d'un grand intérêt pour les hélicoptères qui doivent atterrir ou décoller sur des aires mouvantes telles que ponts de bateau, plates-formes pétrolières, voire même la terre ferme dans des zones exposées à des vents violents. L'intérêt de ces systèmes est que l'hélicoptère se trouve ancré sur une plate-forme, et donc stabilisé, sans délai et de façon automatique. De même, il est libéré sans aide humaine extérieure au dernier instant précédant le décollage. Ces systèmes comprennent une grille montée dans la plate-forme d'atterrissage-décollage, laquelle grille définit des alvéoles à fond ouvert délimités par des ponts ou isthmes. Le harpon est monté sous l'hélicoptère. Il comprend essentiellement un bras rétractable et, à l'extrémité de ce bras, une tête pour l'accrochage dans la grille.

Dans les formes connues, si la grille est globalement satisfaisante, des améliorations restent à apporter au niveau des harpons qui sont généralement des systèmes lourds, encombrants et complexes, tant dans leur structure que dans leur fonctionnement. Les interfaces mécaniques, hydrauliques et électriques étant importantes, les harpons ne peuvent pas être installés simplement sur un hélicoptère si cela n'a pas été prévu initialement par le constructeur.

Leur tête consiste en une pince dont les mâchoires se referment autour d'un isthme entre deux alvéoles. Outre qu'elle est assez encombrante, elle est en elle-même d'une relative complexité, faisant appel pour son fonctionnement à des moyens hydrauliques et électriques. De plus, lors de l'accrochage, l'effort de retenue qu'elle transmet sur la grille, lorsqu'il est important, peut être dommageable pour celle-ci du fait qu'il s'applique sur un seul isthme.

Il existe des têtes de harpon du type défini dans le document GB-A-1 159 323 à savoir un système d'attache comprenant un tube pourvu à une de ses extrémités plusieurs doigts, des moyens de fermeture mobiles axialement dans le tube capables d'entraîner les doigts à partir d'une position contractée permettant leur introduction dans la grille d'arrimage vers une position écartée empêchant leur sortie de la grille, et de moyens de retenue entre une position maintenant les doigts sous forme contractée malgré l'action des moyens de fermeture et une position permettant leur écartement. Une tête d'accrochage selon le preambule de la revendication 1 est connue du GB-A-1 159 323.

Un inconvénient d'un tel dispositif est qu'il n'a pas une structure simple et qu'il n'est pas facilement adaptable sur différents types de bras de harpon. De plus, sa structure fait que les moyens d'entraînement des doigts peuvent être activés même si les doigts ne sont pas parvenus sous le niveau du plus petit diamètre d'une alvéole de la grille d'ancrage.

Le but majeur ayant conduit à l'invention a été de concevoir une nouvelle tête de harpon simple dans sa structure et dans son fonctionnement, et susceptible d'être adaptable sur différents types de bras de harpon, au prix de modifications mineures.

Ce but est atteint ay moyen d'une tête selon la revendication 1.

Un autre but a été la conception de harpons dotés de cette tête, aptes à être montés facilement sur tous types d'aéronefs à décollage et atterrissage verticaux, d'un prix raisonnable pour permettre l'équipement d'hélicoptères légers, et malgré tout capables d'accomplir toutes les fonctions des harpons plus sophistiqués, notamment le placage de l'aéronef.

Les doigts de retenue sont avantageusement au nombre de trois. Ils sont bien entendu dans un même plan transversal, écartés angulairement de 120°. On comprend qu'ainsi, lorsque la tête transmet un effort important sur la grille, cet effort est réparti sur la périphérie de l'alvéole dans lequel est engagée la broche.

Selon l'invention, l'armement des moyens d'entraînement et de retenue des doigts est assuré par un système de gâchette, lequel est libéré par un déclencheur situé au-dessus des doigts sur la broche, et sensible au passage dans l'alvéole. En pratique, il s'agit d'un téton engagé dans un trou radial de la broche et rappelé en position partiellement sortie par un ressort. Au passage de la broche dans un alvéole, le téton est forcé vers l'intérieur et, ce faisant, déclenche le système de gâchette.

Selon l'invention, les moyens d'entraînement et de retenue des doigts comprennent une tige montée apte à coulisser dans un alésage axial de la broche dans lequel débouchent les trous radiaux où sont engagés les doigts. La tige coopère par son extrémité inférieure avec les extrémités internes des doigts. Ces extrémités de la tige et des doigts sont coniques : en position haute de la tige, l'alésage est dégagé au niveau des doigts, de sorte que leur extrémité peut y pénétrer librement lorsqu'ils rentrent dans la broche. Quand la tige descend, son extrémité inférieure chasse progressivement les extrémités des doigts par sa partie conique, puis les contraint à l'extérieur de l'alésage lorsque le contact s'établit au-delà de cette partie conique, les doigts étant alors en position sortie.

La tige est donc armée lorsqu'elle est en position haute. Elle entraîne les doigts en position sortie et les y maintient en descendant. L'un des mouvements de descente ou montée de la tige est avantageusement assuré au moyen d'un ressort de rappel.

Dans une forme simple, l'autre mouvement résulte d'une traction sur la tige effectuée par des moyens mécaniques. La tête de harpon, entièrement mécanique, est ainsi très facilement adaptable, même sur des harpons préexistants, conçus avec un autre type de tête.

En variante, l'autre mouvement de la tige est obtenu par des moyens pneumatiques.

L'invention concerne également des harpons légers comprenant une tête d'accrochage telle que définie ci-dessus. S'agissant de harpons à commande pneumatique, le bras et la tête forment un ensemble fonctionnel cohérent : le bras est un vérin pneumatique, et la tête se trouve à l'extrémité de la tige du vérin. Dans la tête, le verrouillage des doigts en position sortie, ou bien le déverrouillage sont commandés de façon pneumatique.

Dans une forme de réalisation, la tige intérieure dans la broche coopérant avec les extrémités internes des doigts a son extrémité supérieure solidaire d'un piston. Celui-ci se déplace dans une chambre communiquant avec la chambre supérieure du vérin. Lorsque le vérin est déployé, le piston est soumis à la pression. Par conséquent, lors de l'engagement de la broche dans un alvéole, la gâchette retenant la tige en position armée est débloquée, et la pression fait descendre la tige, contre la force d'un ressort de rappel. Lorsque la pression est relâchée dans la chambre supérieure du vérin, ledit ressort fait remonter la tige en position haute dans laquelle elle est à nouveau verrouillée par la gâchette. De même, la rétraction du vérin formant le bras est assurée par un ressort de rappel.

En position déployée du vérin, on peut créer une force de placage en mettant la chambre inférieure du vérin à une pression supérieure à celle de la chambre supérieure.

Dans une variante de réalisation, c'est la remontée de la tige de verrouillage des doigts qui est assurée de façon pneumatique. Dans ce cas, une arrivée pneumatique est prévue au niveau de la broche. Comme précédemment, le déploiement du bras peut être pneumatique, à l'encontre d'un ressort de rappel assurant sa rétraction, ou inversement.

Ces caractéristiques et avantages, ainsi que d'autres, apparaîtront plus clairement dans la description suivante, faite en relation avec les dessins annexés, dans lesquels :
les Figs. 1 et 2 sont des vues en coupe axiale d'une tête de harpon selon l'invention, illustrant respectivement son état au repos, ses doigts étant en position rentrée, et son état lors de l'accrochage dans une grille, ses doigts étant en position sortie,
la Fig. 3 est une vue schématique de face d'une pièce commandant la rentrée et la sortie des doigts,
les Figs. 4a à 4c sont des vues schématiques en coupe axiale illustrant les phases successives de fonctionnement d'une tête semblable à celle des Figs. 1 et 2,
les Figs. 5 et 6 sont des vues schématiques en coupe axiale d'un harpon doté d'une première variante de tête d'accrochage selon l'invention, le montrant respectivement en position de repos, et en position d'accrochage,
la Fig. 7 est une vue semblable à la Fig. 1 d'une seconde variante de tête d'accrochage selon l'invention, et
les Figs. 8 et 9 sont des vues schématiques, partiellement en coupe axiale, illustrant à l'état de repos deux exemples de réalisation de harpon comprenant la seconde variante de tête montrée à la Fig. 7.

Dans l'ensemble des dessins, les mêmes références ont été utilisées pour désigner partout les mêmes éléments.

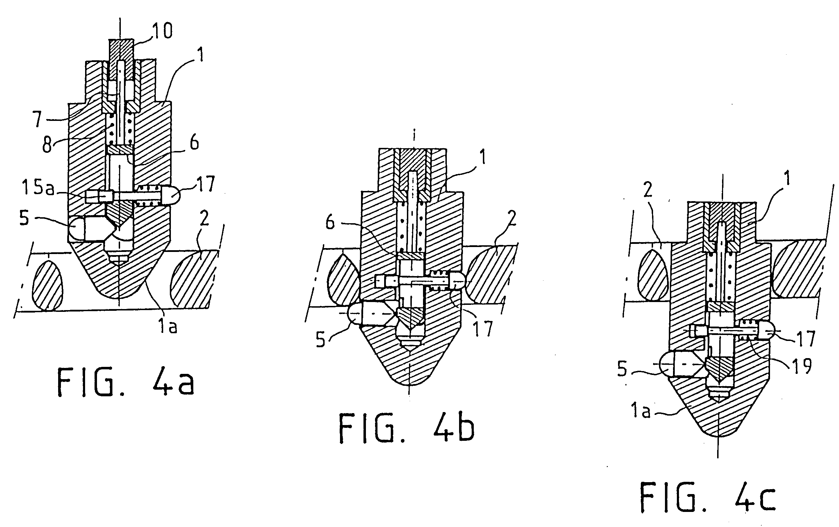

La tête d'accrochage selon l'invention se présente sous la forme d'une broche cylindrique 1, dont l'extrémité inférieure la est convexe, et de préférence conique, pour faciliter sa pénétration à travers les alvéoles d'une grille telle que 2, Figs 4 à 6. Afin qu'elle puisse s'y engager même si son orientation n'est pas strictement normale à la grille, son diamètre est prévu légèrement inférieur au diamètre minimum des alvéoles.

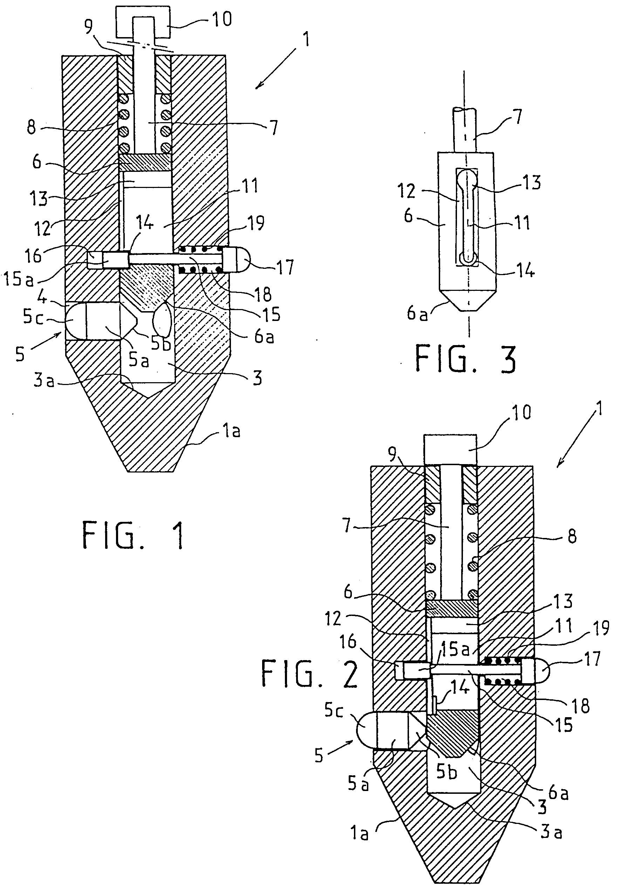

Juste au-dessus de son extrémité conique 1a, la broche 1 comprend trois doigts 5 engagés dans des trous radiaux 4, lesquels débouchent dans un alésage axial 3, à une certaine distance au-dessus de l'extrémité inférieure 3a de cet alésage. Le corps des doigts 5 présente une partie médiane cylindrique 5a, une partie terminale interne 5b de forme conique et une partie terminale externe 5c de forme arrondie. Entre les parties 5a et 5b, un petit épaulement périphérique orienté vers l'extérieur permet l'emprisonnement de la partie médiane 5a à l'intérieur du trou 4, par formation d'un bourrelet intérieur le long du bord de celui-ci. Les doigts 5 sont susceptibles de coulisser dans les trous 4 entre une position rentrée, Fig. 1, pour laquelle l'extrémité externe 5c se trouve à l'intérieur du trou 4, l'extrémité interne 5b étant dans l'alésage 3 et une position sortie, Fig. 2, pour laquelle l'extrémité externe 5c fait saillie à la périphérie de la broche 1, l'extrémité interne 5b étant totalement à l'intérieur du trou 4.

Une tige interne 6 est montée coulissante dans l'alésage 3, dont la fonction est d'entraîner et maintenir les doigts 5 en position sortie. A cet effet, son extrémité inférieure 6a est de forme conique. En position haute, la tige 6 a son extrémité 6a au-dessus des extrémités internes 5b des doigts 5 qui peuvent donc pénétrer librement dans l'alésage 3. Lorsqu'elle descend, la tige 6 chasse les doigts 5 vers l'extérieur, et les maintient sortis par sa surface cylindrique venant obturer les trous 4.

La tige 6 est solidarisée à un bras de manoeuvre 7 sortant de la broche 1 à travers un bouchon 9 fermant l'alésage 3. Autour de la partie du bras 7 à l'intérieur de l'alésage, entre le bouchon 9 et le dessus de la tige 6, un ressort 8 force celle-ci vers le bas, soit vers sa position de verrouillage des doigts 5 en position sortie. La descente de la tige 6 est limitée par butée sur le bouchon 9 d'une tirette 10 fixée à l'extrémité externe du bras 7. La tirette 10 sert également à commander la remontée de la tige 6 dans l'alésage 3.

La broche 1 comporte également un système de gâchette pour retenir la tige 6 en position haute dans l'alésage 3, contre l'effort du ressort 8, et la libérer en réponse à l'engagement dans un alvéole de grille, après que les trois doigts 5 ont dépassé vers le bas le plan du plus petit diamètre entre les isthmes délimitant cet alvéole.

Le système de gâchette comprend, d'une part, dans la tige 6, un trou 11 allongé longitudinalement et la traversant diamétralement, comme on peut le voir à la Fig. 3. D'un côté, autour du trou 11, la surface périphérique de la tige 6 présente un décrochement 12 sous la forme d'un méplat. Par ailleurs, le haut du trou 11 s'élargit en une partie cylindrique 13, tandis que sa base, du côté du méplat 12, présente un lamage 14.

Le système comprend d'autre part une tige transversale 15 passant à travers le trou 11. Du côté du décrochement 12, l'extrémité 15a de la tige 15 présente un épaulement circulaire s'appuyant sur le bord du trou 11, lequel épaulement est de diamètre légèrement inférieur à ceux du lamage 14 et de la partie cylindrique 13. L'extrémité 15a est engagée coulissante dans un trou borgne 16 ménagé à partir de l'alésage 3 dans le corps de la broche 1.

L'autre extrémité de la tige 15 est solidarisée avec un téton 17 engagé dans un trou 18 débouchant à la périphérie du corps de la broche 1. Le téton 17 comporte une partie interne cylindrique coulissant dans le trou 18 et une partie externe arrondie. Il est rappelé vers l'extérieur par un ressort 19 et constitue le déclencheur du système de gâchette.

La partie cylindrique 13 du trou 11 sert uniquement au montage du système, permettant de faire passer l'extrémité élargie 15a de la tige 15 à travers le trou 11.

On voit à la Fig. 1 que la tige 6 de verrouillage des doigts 5 est maintenue en position haute, à l'encontre du ressort 8, par engagement de l'extrémité 15a de la tige 15 dans le lamage 14. Le téton 17 sort alors du corps de la broche 1 d'une distance telle que la somme de cette distance et du diamètre de la broche 1 est supérieure au diamètre mimimum d'un alvéole.

Les Figs. 4a à 4c illustrent schématiquement le fonctionnement d'une telle tête d'accrochage. A la Fig. 4a, la broche 1 descend verticalement vers la grille 2. La tige 6 est retenue en position haute par le système de gâchette, à l'encontre du ressort 8. Les doigts 5 sont en position escamotée à l'intérieur du corps de la broche.

Au contact de la grille 2, la broche 1 est guidée par son extrémité 1a à l'intérieur d'un alvéole de la grille 2, en prenant éventuellement une légère obliquité par rapport à celle-ci. Alors que la broche 1 continue à descendre, ses doigts 5 passent au-dessous du niveau du plus petit diamètre de l'alvéole, avant que le téton 17 ne soit entré en contact avec la grille.

Quand ce contact a lieu, Fig. 4b, la tige 6 libérée descend par l'action du ressort 8, en chassant les doigts 5 vers l'extérieur. On notera que le système de sortie des doigts 5 est tel que s'ils sont bloqués lors du déclenchement du système de gâchette, il ne s'ensuit pas de conséquences néfastes pour les pièces du dispositif, la tige 6 restant simplement retenue par les extrémités internes 5b des doigts 5. Et, surtout, le verrouillage est quand même assuré dès que les doigts sont débloqués. Par contre, le verrouillage des doigts 5 est absolument sûr tant que la tige 6 reste en position de verrouillage.

La Fig. 4c illustre la phase où, la broche 1 ayant continué à descendre dans l'alvéole, le téton 17 n'est plus en contact avec la grille 2. Alors, la tige 15 solidaire du téton 17 dans le système de gâchette est rappelée par le ressort 19, de sorte que l'épaulement de son extrémité 15a s'appuie sur le méplat de la tige 6 autour du trou 11, dans le décrochement 12. Les doigts 5 étant verrouillés en position sortie par la tige 6, la broche 1 est ancrée de façon stable dans la grille 2. Si la broche 1 est remontée, les doigts 5 la retiennent emprisonnée dans l'alvéole en s'appuyant sous ses bords. Si l'effort exercé vers le haut sur la broche 1 doit être important, il convient de vérifier au préalable que son orientation est bien perpendiculaire à la grille 2, afin que cet effort soit correctement distribué entre les trois doigts 5.

La tête d'accrochage qui vient d'être décrite est entièrement mécanique, et donc d'implantation aisée sur des harpons très simples, puisqu'elle ne requiert pour son fonctionnement aucun moyen extérieur, hormis un moyen pour exercer une traction sur la tirette 10, pour le réarmement. Cette tête est même adaptable sur des harpons préexistants, et donc dotés de construction d'un autre type de tête.

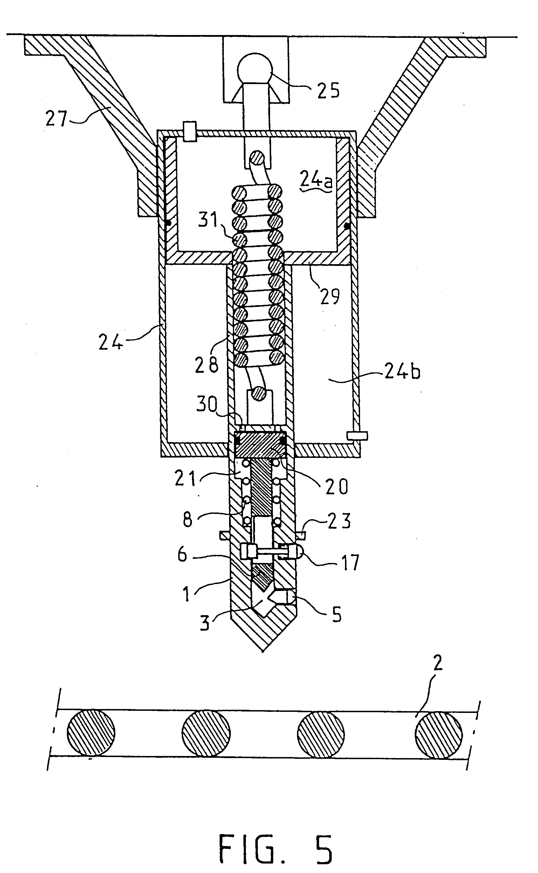

Dans les autres formes de réalisation apparaissant aux Figs. 5 et suivantes, des moyens pneumatiques sont conjugués avec des moyens mécaniques. A cet effet, la tige 6 est solidaire par son extrémité supérieure d'un piston 20 mobile dans un alésage axial 21.

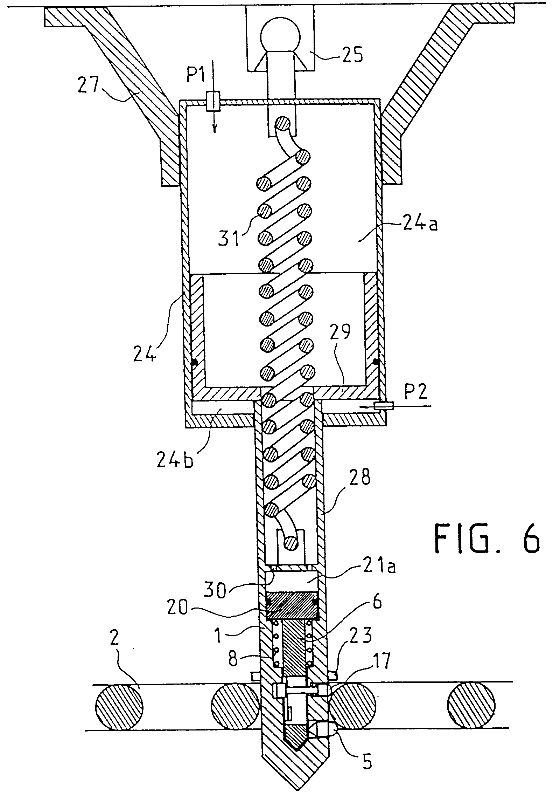

Dans la broche des Figs. 5 et 6, le piston 20 est soumis à la pression par le haut, dans la chambre 21a, tandis qu'il est rappelé en position haute par le ressort 8. Par conséquent, la descente de la tige 6 en position de verrouillage des doigts 5 est pneumatique, tandis que sa remontée en position haute est mécanique.

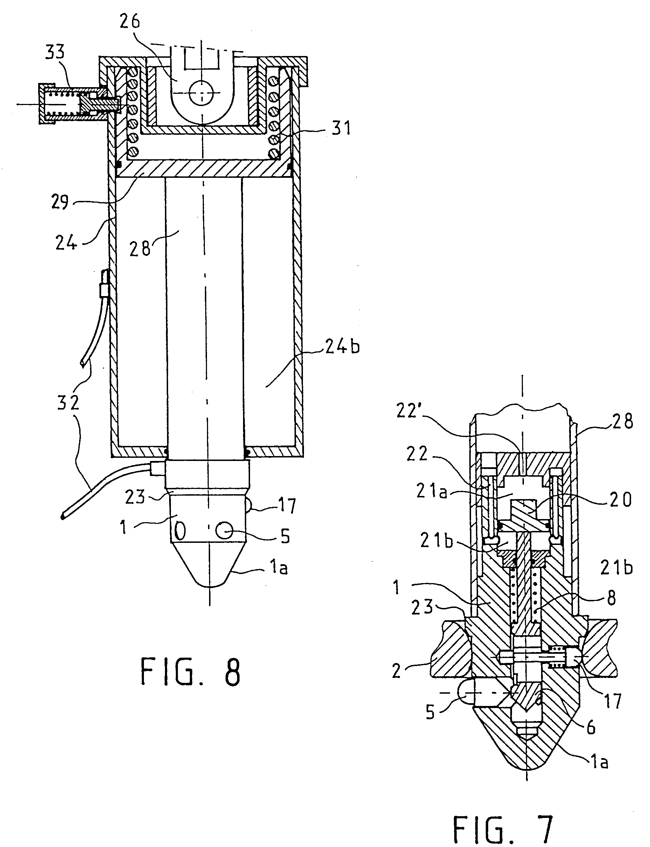

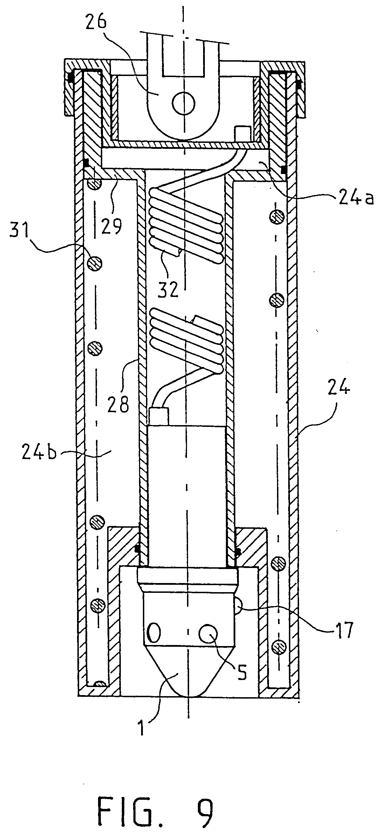

Aux Figs. 7 à 9, le piston 20 est soumis à la pression sur sa face inférieure, la chambre 21b étant mise en pression par les passages 22, lesquels sont connectables à une source d'air sous pression au niveau de l'extrémité supérieure de la broche 1, Figs. 7 et 9, ou sur le côté, Fig. 8. La chambre supérieure 21a de l'alésage 21 comporte un évent 22'. Le ressort 8 rappelle le piston 20 en position basse. Dans cette broche, la descente de la tige 6 en position de verrouillage des doigts 5 est donc mécanique, et sa remontée pneumatique.

On voit également sur les Figs. 5 à 9 que la broche 1 est avantageusement pourvue d'une butée pour limiter sa pénétration dans la grille 2, sous la forme d'une collerette ou épaulement périphérique 23.

Le harpon léger des Figs. 5 et 6 a été conçu à partir d'une broche 1 dans laquelle la descente de la tige 6 en position de verrouillage des doigts 5 est pneumatique. Le bras du harpon consiste en un vérin 24 qui se fixe sous l'aéronef par une articulation à rotule 25 ou, en variante, par une articulation à cardan 26, comme montré aux Figs. 8 et 9. Cette dernière permet d'utiliser la fixation d'un crochet de charge équipant la plupart des hélicoptères.

Un manchon souple 27 protège l'articulation 25 ou 26. Au surplus, il sert à rappeler le vérin 24 en position verticale.

La broche 1 constitue la partie inférieure de la tige 28 du vérin 24. La tige 28 est creuse, de sorte que la chambre supérieure 21a dans la broche 1 communique à travers elle et le piston 29 avec la chambre supérieure 24a du vérin 24, par les passages 30.

D'autre part, le piston 29 est rappelé en position haute - état rétracté du vérin 24 et donc du harpon - par un ressort 31.

A l'état de repos, Fig. 5, le vérin 24 est maintenu rétracté par le ressort 31, et la tige 6 en position haute dans la broche 1 par le système de gâchette.

L'ancrage du harpon est commandé par mise à une pression P1 de la chambre 24a et, par conséquent, de la chambre supérieure 21a de l'alésage 21. Le vérin 24 se déploie et, concomitamment, le système de gâchette étant armé, la pression dans la chambre 21a induit sur le piston 20 une force supérieure à la force opposée du ressort 8, sans provoquer la descente de la tige 6. Par conséquent, au passage de la broche 1 dans un alvéole de la grille 2, Fig. 6, le téton 17 déclenche le système de gâchette et la tige 6 descend dans la broche sous l'effet de la pression P1, en verrouillant les doigts 5 en position sortie. Ensuite, la mise en tension du harpon, pour le placage de l'aéronef, peut être réalisée en établissant dans la chambre 24b du vérin 24 une pression P2 supérieure à la pression P1. Les deux chambres 24a, 24b étant sous pression, le vérin 24 accomplit en outre un rôle d'amortisseur avantageux lors des variations de contraintes sur le harpon.

Pour le décrochage du harpon, la chambre 24b est d'abord mise à l'échappement, puis la chambre 24a et par conséquent la chambre 21a. Sous l'action du ressort 8, la tige 6 remonte dans la broche 1 de sorte que les doigts 5 sont déverrouillés, autorisant la remontée de la broche 1 hors de la grille 2 par rétraction du vérin 24, laquelle rétraction est assurée par le ressort 31. Dans l'alésage 3, la tige 6 remonte jusqu'à réarmement du système de gâchette, de sorte que le harpon est prêt pour un nouveau cycle de fonctionnement.

Le harpon de la Fig. 8 comprend pour l'essentiel les mêmes éléments que celui des Figs. 5 et 6, et ne sera donc pas décrit en détail. Il comporte une broche 1 de même type que celle de la Fig. 7, à savoir que la sortie et le verrouillage des doigts 5 sont mécaniques, et la remontée de la tige 6 pneumatique.

La broche 1 est reliée à une source d'air sous pression par un tube flexible extérieur 32. Le vérin 24 est quant à lui strictement à simple effet, c'est-à-dire que seule sa chambre inférieure 24b peut être mise en pression, pour assurer sa rétraction et la fonction de placage. Son déploiement est assuré par le ressort 31, le piston étant retenu en position haute par un verrou pneumatique 33 à enclenchement automatique.

Ce harpon a l'avantage de nécessiter très peu d'énergie extérieure lors de l'accrochage, seulement pour le déclenchement du verrou 33. En effet, le déploiement du bras et l'accrochage de la broche dans la grille résultent de l'action des ressorts 8 et 31. Comme celui des Figs. 5 et 6, le harpon accomplit la fonction de placage par mise en pression de la chambre 24b.

Pour le décrocher, il faut, le cas échéant, relâcher la pression dans la chambre 24b, puis établir la pression dans la chambre 21b, sous le piston 20 par le tube flexible 32 : la tige 6 remonte dans l'alésage 3, déverrouillant les doigts 5. En établissant à nouveau la pression dans la chambre 24b, le vérin 24 se rétracte en comprimant le ressort 31. Lorsque la tête 1 a quitté la grille 2, la pression peut être relâchée dans la chambre 21b, la tige 6 étant retenue en position haute par le système de gâchette.

Par rapport au harpon de la Fig. 8, le harpon de la Fig. 9 ne diffère fonctionnellement que par le fait que le vérin 24 se déploie de façon pneumatique, par mise en pression de la chambre supérieure 24a, et se rétracte mécaniquement, par l'action du ressort 31, lequel est monté entre la base de la chambre inférieure 24b et le dessous du piston 29. Le tube flexible 32 reliant la broche 1 à la source d'air comprimé passe à l'intérieur de la tige 28 et de la chambre 24a du vérin 24.

Pour l'accrochage du harpon, la chambre 24a est mise en pression, de sorte que le vérin 24 se déploie. Lors de la pénétration de la broche dans l'alvéole, les doigts 5 sont verrouillés par descente de la tige 6 sous l'action du ressort 8, Fig. 7. La chambre 24a peut alors être mise à l'échappement. Comme avec les harpons précédemment décrits, la fonction placage est obtenue par mise en pression de la chambre 24b.

Pour le décrochage, on relâche en premier lieu la pression dans la chambre 24b, puis on établit la pression dans la chambre 21b de la broche, ce qui a pour effet de libérer les doigts 5 par remontée de la tige 6. Le vérin 24 est alors rétracté sous l'action du ressort 31, par mise à l'échappement de la chambre 24a si la pression a été maintenue dans celle-ci, et la chambre 21b peut également être mise à l'échappement dès que la broche 1 a quitté la grille.

## Revendications

1. Tête d'accrochage de harpon dans un système d'ancrage mettant en oeuvre un harpon et une grille (2) et utilisé pour l'arrimage d'un aéronef à décollage et atterrissage verticaux comportant une broche qui comprend des doigts (5) orientés et mobiles radialement, des moyens pour entraîner et retenir en position sortie les doigts (5), ces moyens agissant à partir d'un état armé en réponse à la pénétration de la broche (1) dans un alvéole de la grille (2) après que les doigts (5) sont parvenus sous le niveau du plus petit diamètre de cet alvéole, et des moyens pour verrouiller les doigts (5) et réarmer les moyens d'entraînement et de retenue, tête de harpon caractérisée en ce que
la broche est cylindrique à extrémité convexe,
les doigts sont près de cette extrémité et sont orientés et mobiles radialement, selon des axes perpendiculaires à l'axe de la broche (1), entre une position escamotée à l'intérieur de la broche et une position sortie,
les moyens d'entraînement et de retenue consistent en une tige (6) montée apte à coulisser dans un alésage axial (3) de la broche, dans lequel débouchent des trous radiaux (4) où sont engagés les doigts (5), la tige coopérant par son extrémité inférieure conique (6a) avec les extrémités internes (5b) également coniques des doigts (5),
et les moyens de verrouillage et de réarmement consistent en un système de gâchette comprenant la tige (6), laquelle est libérée par un déclencheur (17) située au-dessus des doigts (5) et sensible au passage dans un alvéole de la grille (2).

2. Tête de harpon selon la revendication 1, caractérisée en ce que les doigts (5) sont au nombre de trois, écartés angulairement de 120°.

3. Tête de harpon selon la revendication 1 ou 2, caractérisée en ce que la broche (1) comporte une collerette ou épaulement périphérique (23) pour limiter sa pénétration dans la grille (2).

4. Tête de harpon selon la revendication 3, caractérisée en ce que l'un des mouvements de descente ou de montée de la tige (6) dans l'alésage (3) est assuré par un ressort (8).

5. Tête de harpon selon la revendication 4, caractérisée en ce que la tige (6) est rappelée vers le bas par le ressort (8), le retour en position haute étant obtenu par traction sur une tirette (10) dont elle est solidaire.

6. Tête de harpon selon la revendication 5, caractérisée en ce que l'autre mouvement de la tige (6) est assuré par des moyens pneumatiques.

7. Harpon coopérant avec une grille (2) dans un système d'arrimage pour aéronef à décollage et atterrissage verticaux, caractérisé en ce qu'il comporte une tête d'accrochage selon l'une des revendications 1 à 6.

8. Harpon selon la revendication 7, comprenant une tête d'accrochage selon la revendication 6, caractérisé en ce que son bras est constitué par un vérin (24), et en ce que la tête ou broche (1) se trouve à l'extrémité de la tige (28) du vérin (24).

9. Harpon selon la revendication 8, caractérisé en ce que dans la broche (1), la montée de la tige (6) dans l'alésage (3) est mécanique et sa descente pneumatique, la tige (6) étant solidaire d'un piston (20) mobile dans un alésage (21) dont la chambre supérieure (21a) communique avec la chambre supérieure (24a) du vérin (24), le déploiement du vérin (24) et l'accrochage dans la grille étant commandés par mise en pression de la chambre (24a) et, par conséquent, de la chambre (21a), et le décrochage et la rétraction du harpon par relâchement de la pression, le ressort (8) assurant alors la remontée de la tige (6) dans l'alésage (3), et un ressort (31) la remontée du piston (29) dans le vérin (24).

10. Harpon selon la revendication 8, caractérisé en ce que dans la broche (1), la descente de la tige (6) dans l'alésage (3) est mécanique et sa remontée pneumatique, la tige (6) étant solidaire d'un piston (20) mobile dans un alésage (21) dont la chambre inférieure (21b) communique avec une source d'air comprimé par un tube flexible (32).

11. Harpon selon la revendication 10, caractérisé en ce que le déploiement du vérin (24) est assuré par un ressort (31), et sa rétraction par mise en pression de sa chambre inférieure (24b), l'état rétracté étant maintenu au moyen d'un verrou (33).

12. Harpon selon la revendication 11, caractérisé en ce que le déploiement du vérin (24) est assuré par mise en pression de la chambre supérieure (24a), et sa rétraction par l'action d'un ressort (31).

13. Harpon selon l'une des revendications 8 à 12, caractérisé en ce qu'en position d'accrochage, il est mis en tension par mise en pression de la chambre inférieure (24b) du vérin (24).

## Claims

1. A harpoon catching head in an anchoring system using a harpoon and a grid (2), and used for securing a vertical take-off and landing aircraft, including a shaft (1) having fingers (5) oriented and movable radially, means for moving and retaining the fingers (5) in the extented position, said means acting from a state activated in response to the penetration of the shaft (1) into a cell of the grid (2), after which the fingers (5) are brought under the level of the smallest diameter of said cell, and means for locking the fingers (5) and resetting said moving and retaining means, harpoon head characterised in that,
the shaft is cylindrical with a convex end,
the finger are near said end and are oriented and movable radially according to perpendicular axes with respect to axe of the shaft, between a retracted position inside the shaft and an extented position,
moving and retaining means consisting of a rod (6) mounted so that it is capable of sliding into an axial bore (3) in the shaft, into which open the radial holes (4) in which
the fingers (5) are engaged, the rod cooperating via its conical lower end (6a) with the inner ends (5b), which are also conical,
and locking and resetting means consisting of a trigger system including the rod (6), which is located above the fingers (5) and a sensitive to the passage into a cell of the grid (2).

2. A harpoon head according to claim 1, characterised in that the fingers (5) are three in number, with an angular offset of 120°.

3. A harpoon head according to claim 1 or 2, characterised in that the shaft (1) has a collar or peripheral shoulder (23) to limit its penetration into the grid (2).

4. A harpoon head according to claim 3, characterised in that one of the descending or rising movements of the rod (6) in the bore (3) is provided by a spring (8).

5. A harpoon head according to claim 4, characterised in that the rod (6) is returned towards the bottom by the spring (8), the return to the top position being obtained by traction on a pull cable (10) of which it is an integral part.

6. A harpoon head according to claim 4, characterised in that the other movement of the rod (6) is provided by pneumatic means.

7. A harpoon cooperating with a grid (2) in a securing system for vertical take-off and landing aircraft, characterised in that it comprises a catching head according to one of claims 1 to 6.

8. A harpoon according to claim 7, comprising a catching head according to claim 6, characterised in that its arm is constitued by a jack (24), and in that the head or shaft (1) is located at the end of the rod (28) of the jack (24).

9. A harpoon according to claim 8, characterised in that, in the shaft (1), the ascent of the rod (6) in the bore (3) is mechanical and its descent is pneumatic, the rod (6) being integral with a piston (20) movable in a bore (21), the upper chamber (21a) of which communicates with the upper chamber (24a) of the jack (24), the extension of the jack (24) and the catching in the grid being controlled by pressurisation of the chamber (24a) and, as a consequence, of the chamber (21a), and the releasing and the retraction of the harpoon being controlled by releasing of the pressure, the spring (8) thereby ensuring the raising of the rod (6) into the bore (3), and a spring (31) ensuring the raising of the piston (29) into the jack (24).

10. A harpoon according to claim 8, characterised in that, in the shaft (1), the descent of the rod (6) in the bore (3) is mechanical and its raising is pneumatic, the rod (6) being integral with a piston (20) movable in a bore (21), the lower chamber (21b) of which communicates with a compressed air source via a flexible tube (32).

11. A harpoon according to claim 10, characterised in that the jack (24) is extented by a spring (31), and is retracted by pressurisation of its lower chamber (24b), the retracted state being maintained by means of a lock (33).

12. A harpoon according to claim 10, characterised in that the jack (24) is extented by pressurisation of the upper chamber (24a), and is retracted by the action of a spring (31).

13. A harpoon according to one of claims 8 to 12, characterised in that, in the catching position, it is tensioned by pressurisation of the lower chamber (24b) of the jack (24).

## Patentansprüche

1. Harpunen-Verhakungskopf in einem Verankerungssystem, bestehend aus einer Harpune und einem Gitter (2), das für die Befestigung eines senkrecht startenden und landenden Luftfahrzeugs verwendet wird, mit einer Spindel bestehend aus radial orientierten und beweglichen Fingern (5), Mitteln zur Mitnahme und zum Festhalten in ausgefahrener Position der Finger (5), wobei diese Mittel ab einem geladenen Zustand als Antwort auf das Eindringen der Spindel (1) in eine Wabe des Gitters (2) wirken, nachdem die Finger (5) unter der Ebene des kleinsten Durchmessers dieser Wabe angekommen sind, und Mitteln zur Verriegelung der Finger (5) und zur Zurücksetzung der Mitnahme- und Festhaltermittel, Harpunenkopf dadurch gekennzeichnet, daß
die Spindel zylinderförmig ist und ein konvexes Ende aufweist,
sich die Finger in der Nähe dieses Endes befinden und radial orientiert und beweglich sind, nach den senkrecht zur Spindelachse (1) verlaufenden Achsen, zwischen einer eingezogenen Stellung innerhalb der Spindel und einer ausgefahrenen Stellung,
die Mitnahme- und Festhaltemittel aus einer Stange (6) bestehen, die so montiert ist, daß sie in eine axiale Bohrung (3) der Spindel gleiten kann, in die radiale Löcher (4) münden, wo die Finger (5) eingeführt werden, während die Stange mittels ihres unteren kegelförmigen Endes (6a) mit den internen, ebenfalls kegelförmigen Enden (5b) der Finger (5) zusammenwirkt,
und daß die Verriegelungs- und Rücksetzungsmittel aus einem Drückersystem bestehen, das die Stange (6) umfaßt, die von einer Auslösevorrichtung (17) freigesetzt wird, die sich über den Fingern (5) befindet und beim Durchgang durch eine Wabe des Gitters (2) empfindlich ist.

2. Harpunenkopf nach Anspruch 1, dadurch gekennzeichnet, daß er drei Finger (5) umfaßt, die um 120° abgewinkelt sind.

3. Harpunenkopf nach einem der Ansprüche 1 oder 2, dadurch gekennzeichnet, daß die Spindel (1) einen periphären Kragen bzw. Schulterstück (23) aufweist, um ihr Eindringen in das Gitter (2) zu begrenzen.

4. Harpunenkopf nach Anspruch 3, dadurch gekennzeichnet, daß eine der Senk- oder Hubbewegungen der Stange (6) in der Bohrung (3) von einer Feder (8) gewährleistet wird.

5. Harpunenkopf nach Anspruch 4, dadurch gekennzeichnet, daß die Stange (6) von der Feder (8) zurückgezogen wird, während die Rückkehr in die obere Stellung durch Ziehen einer Zugschnur (10) erfolgt, die mit ihr verbunden ist.

6. Harpunenkopf nach Anspruch 5, dadurch gekennzeichnet, daß die andere Bewegung der Stange (6) über pneumatische Mittel gewährleistet wird.

7. Mit einem Gitter (2) in einem Befestigungssytem für senkrecht startende und landende Flugfahrzeuge zusammenwirkende Harpune, dadurch gekennzeichnet, daß sie einen Verhakungskopf nach einem der Ansprüche 1 bis 6 aufweist.

8. Harpune nach Anspruch 7, mit einem Verhakungskopf nach Anspruch 6, dadurch gekennzeichnet, daß ihr Arm aus einem Zylinder (24) besteht und daß der Kopf bzw. die Spindel (1) am Ende der Stange (28) des Zylinders (24) angeordnet ist.

9. Harpune nach Anspruch 8, dadurch gekennzeichnet, daß das Heben der Stange (6) in der Bohrung (3) innerhalb der Spindel (1) mechanisch und ihr Absenken pneumatisch erfolgt, während die Stange (6) mit einem Kolben (20) verbunden ist, der sich in einer Bohrung (21) bewegt, deren obere Kammer (21a) mit der oberen Kammer (24a) des Zylinders (24) in Verbindung steht, wobei das Ausfahren des Zylinders (24) und das Verhaken im Gitter durch den Druckaufbau in der Kammer (24a) und demzufolge in der Kammer (21a) gesteuert werden, und das Aushaken und Einziehen der Harpune durch den Druckabbau, wobei die Feder (8) das Hochfahren der Stange (6) in der Bohrung (3) und eine Feder (31) das Hochfahren des Kolbens (29) im Zylinder (24) gewährleisten.

10. Harpune nach Anspruch 8, dadurch gekennzeichnet, daß das Absenken der Stange (6) in der Bohrung (3) innerhalb der Spindel (1) mechanisch und ihr Heben pneumatisch erfolgen, während die Stange (6) mit einem Kolben (20) verbunden ist, der sich in einer Bohrung (21) bewegt, deren untere Kammer (21b) über einen Schlauch (32) mit einer Druckluftquelle in Verbindung steht.

11. Harpune nach Anspruch 10, dadurch gekennzeichnet, daß das Ausfahren des Zylinders (24) von einer Feder (31) und sein Rückzug durch den Druckaufbau in seiner unteren Kammer (24b) gewährleistet werden, wobei der zurückgezogene Zustand mittels eines Riegels (33) aufrechterhalten wird.

12. Harpune nach Anspruch 11, dadurch gekennzeichnet, daß das Ausfahren des Zylinders (24) durch den Druckaufbau in der oberen Kammer (24a) und sein Rückzug durch die Wirkung einer Feder (31) gewährleistet werden.

13. Harpune nach einem der Ansprüche 8 bis 12, dadurch gekennzeichnet, daß sie in verhakter Stellung durch den Druckaufbau in der unteren Kammer (24b) des Zylinders (24) unter Spannung gesetzt wird.
